# EUROPÄISCHE PATENTSCHRIFT

(11) **EP 4 359 685 B1**
(45) Veröffentlichungstag und Bekanntmachung des Hinweises auf die Patenterteilung: **30.04.2025**
(21) Anmeldenummer: 22734964.4
(22) Anmeldetag: 23.06.2022
(51) Int. Cl.: F16F 15/173

(54) **VISKOSITÄTSDREHSCHWINGUNGSDÄMPFER ODER VISKOSITÄTSDREHSCHWINGUNGSTILGER**
VISCOUS TORSIONAL VIBRATION DAMPER OR VISCOUS TORSIONAL VIBRATION ABSORBER
AMORTISSEUR DE VIBRATIONS TORSIONNELLES DE VISCOSITÉ OU ABSORBEUR DE VIBRATIONS TORSIONNELLES DE VISCOSITÉ

(30) Priorität: 24.06.2021 DE 102021116417
(43) Veröffentlichungstag der Anmeldung: 01.05.2024
(73) Patentinhaber: Hasse & Wrede GmbH, 12681 Berlin (DE)
(72) Erfinder: STEIDL, Michael, 10318 Berlin (DE); PERUMAL, Charles, 13127 Berlin (DE); TERJEK, Dora, 6100 Kiskunfélegyháza (HU)
(74) Vertreter: Specht, Peter
(86) Internationale Anmeldenummer: PCT/EP2022/067159
(87) Internationale Veröffentlichungsnummer: WO 2022/268946

(56) Entgegenhaltungen:
- EP-A1- 2 850 330
- DE-A1- 102013 006 751
- US-A- 3 262 334
- US-A- 3 398 602

## Beschreibung

Die vorliegende Erfindung betrifft einen Viskositätsdrehschwingungsdämpfer oder Viskositätsdrehschwingungstilger gemäß dem Oberbegriff des Anspruchs 1.

Viskositätsdrehschwingungsdämpfer oder Viskositätsdrehschwingungstilger der gattungsgemäßen Art sind an sich bekannt. Derartige Dämpfer oder Tilger werden benutzt, um Drehschwingungen an Kurbelwellen von Hubkolbenmotoren zu reduzieren, wobei innerhalb des Gehäuses derartiger Dämpfer oder Tilger Schwungringe oder Schwungmassen gelagert sind. Anstatt eines Gehäuses kann auch nur eine Nabe verwendet werden, die von einem Schwungring umschlossen wird, wie dies beispielsweise in der DE 10 2016 113 719 A1 offenbart ist. Das Gehäuse oder die Nabe weisen dabei üblicherweise ein an einer Kurbelwelle eines Motors, insbesondere eines Verbrennungsmotors, befestigbares Flanschteil auf, wobei der Schwungring relativ zu dem Gehäuse bzw. zu der Nabe drehbar ist, wobei ein Scherspalt gebildet wird, welcher mit einem flüssigen Schermedium wie z.B. dem oben genannten Silikonöl gefüllt ist. In diesem mit Silikonöl gefüllten Scherspalt dienen Bundbuchsen zur Führung und Lagerung des Schwungringes. Allerdings kommen auch andere Gleitlagerbauteile wie Axiallagerringe oder auch Gleitlagerstopfen zur Lagerung des Schwungrings ggf. auch in Kombination miteinander zum Einsatz.

Diese Gleitlagerbauteile, insbesondere in der Ausgestaltung als Bundbuchsen, werden üblicherweise ohne Vorspannung zwischen den beiden Dämpfergehäusen und dem Schwungring eingefügt, um Gehäuse und Ring mit möglichst kleiner Reibung auf den Bundbuchsen gleiten zu lassen.

Problematisch bei hohen Temperaturen, insbesondere bei Temperaturen oberhalb von 130 °C, die bei Drehschwingungsdämpfern aufgrund der Scherung des Dämpfungsmediums Silikonöl im Fahrbetrieb regelmäßig entstehen, ist, dass es zwischen den herkömmlichen Bundbuchsen, welche in der Regel aus Polyamid hergestellt sind, und dem Silikonöl häufig zu Wechselwirkungen kommt, welche zu einer sehr schnell ablaufenden Degeneration der Viskosität des Silikonöls führen. So wurde bei Versuchen mit einer Viskositätsdrehschwingungsdämpfer - Außentemperatur von 160°C eine Abnahme der Viskosität um 53 % nach Ablauf von ca. 20 Stunden festgestellt. Die Lebensdauer solcher Viskositätsdrehschwingungsdämpfer beträgt in der Regel 20.000 Stunden. Dabei wird in diesem Zeitraum ein Verschleiß von nur 30 % angestrebt.

Zur Lösung dieses Problems könnte einerseits versucht werden, die hohe Betriebstemperatur herabzusetzen, was aber aufgrund von Bauraumbeschränkungen und höheren Spitzendrücken der Motoren nicht wahrscheinlich erscheint, sodass die Viskositätsdrehschwingungsdämpfer tendenziell dazu ausgelegt werden müssen, noch höhere Temperaturen auszuhalten und es daher auch nicht sinnvoll erscheint, die Viskositätsdrehschwingungsdämpfer so auszulegen, dass sie im Betrieb keinen solch hohen Temperaturen ausgesetzt sind.

Die DE 10 2013 006 751 A1 offenbart einen gattungsgemäßen Viskositätsdrehschwingungsdämpfer oder einen Viskositätsdrehschwingungsdämpfer, welcher Bundbuchsen aus einem Flüssigkristallpolymer aufweist. Dieses Material hat sich zur Verwendung in Viskositätsdrehschwingungsdämpfern grundsätzlich als gut geeignet erwiesen.

Allerdings ist die Verfügbarkeit des Materials eingeschränkt. Zudem können die Materialeigenschaften in Abhängigkeit vom Ordnungszustand der jeweiligen Charge bis hin zum Ordnungsgrad der Polymerstruktur variieren, woraus sich zugleich eine Varianz zwischen den kristallinen und des flüssigen ungeordneten Zustands ergibt.

Zugleich sind allerdings bei der Nutzung der LCP-Buchsen die Wechselwirkungen mit dem Silikonöl sehr gering und folglich nahezu ideal, was insgesamt die Nutzung von LCP-Buchsen sehr vorteilhaft für die Anwendung im Viskositätsdrehschwingungsdämpfern macht.

Aufgabe der vorliegenden Erfindung ist es daher, einen Viskositätsdrehschwingungsdämpfer oder einen Viskositätsdrehschwingungstilger bereit zu stellen, der vergleichbar zu LCP-Material auch bei Temperaturen oberhalb von 130°C eine längere Lebensdauer gewährleistet als herkömmliche Viskositätsdrehschwingungsdämpfer oder -tilger und den Viskositätsdrehschwingungsdämpfer oder -tilger hinsichtlich seiner Lebensdauer noch weiter verbessert.

Diese Aufgabe wird durch einen Viskositätsdrehschwingungsdämpfer oder einen Viskositätsdrehschwingungstilger mit den Merkmalen des Anspruches 1 gelöst.

Ein erfindungsgemäßer Viskositätsdrehschwingungsdämpfer oder -tilger weist ein an einer Kurbelwelle eines Motors, insbesondere eines Verbrennungsmotors, befestigbares Nabenteil und einen relativ zum Nabenteil verdrehbar gelagerten Schwungring auf. Das Nabenteil kann ein Gehäuse aufweisen oder wie in der DE 10 2016 113 719 A1 gezeigt, lediglich einen Randabschnitt einer Nabe. Zwischen dem Nabenteil und dem Schwungring ist ein mit einem Silikonöl gefüllter Scherspalt ausgebildet, in welchem eines oder mehrere Gleitlagerbauteile zur gleitgeführten Lagerung des Schwungringes angeordnet sind. Das oder die Gleitlagerbauteile sind erfindungsgemäß zumindest bereichsweise aus einem polyphthalamidhaltigen Kunststoff mit mehr als 50 Gew.% PPA, gebildet

Der erfindungsgemäße Viskositätsdrehschwingungsdämpfer oder -tilger zeichnet sich somit bezogen auf die Ausgestaltung der DE 10 2013 006 751 A1 dadurch aus, dass die Bundbuchsen aus einem Polyphthalamid (PPA) bestehen. Dieser Begriff schließt nach der Definition der vorliegenden Erfindung auch ein modifiziertes PPA, vorzugsweise ein olefin-modifiziertes PPA mit ein. Es hat sich gezeigt, dass dieses Material stärkere Wechselwirkungen als LCP mit Silikonöl eingeht, diese allerdings im Vergleich zu herkömmlichen Lagern z.B. aus PA66 oder dergleichen immer noch wesentlich geringer sind.

Zugleich zeichnet sich das Material durch gute Verschleißeigenschaften aufgrund der glatten Materialoberfläche aus.

Insbesondere die Reibeigenschaften des PPA-Materials sind wesentlich besser als ein Großteil anderer Materialien.

Die Auswahl von PPA-Material gegenüber LCP-Material ist insofern überraschend, als dass es sich um eine grundverschiedene Materialklasse handelt, welche deutlich-geringere Wechselwirkungen mit Silikon als bisherige PA-Buchsen eingeht und umgekehrt bessere Reibeigenschaften als LCP-Buchsen aufweist. Diese Reibeigenschaften verbessern die Lebensdauer des Gleitlagers insgesamt. Somit bildet das PPA-Material einen optimierten Kompromiss zwischen den hergebrachten PA66-Gleitlagerbauteilen und den LCP-Gleitlagerbauteilen im Bereich der Viskositätsdrehschwingungsdämpfer oder - tilger.

Der Einsatz solcher erfindungsgemäßer Gleitlagerbauteilen in einem Viskositätsdrehschwingungsdämpfer oder -tilger ermöglicht insgesamt auch eine längere Lebensdauer des Viskositätsdrehschwingungsdämpfers oder -tilgers den anderen Drehschwingungsdämpfern mit herkömmlichen Buchsen oder Lagermaterialien.

Das verwendete Polyphthalamid kann verdichtet und/oder hitzestabilisiert ausgebildet sein. Bei PPA handelt es sich um ein halbkristallines teilaromatisches Polyamid, so dass verschiedene Dichten in Abhängigkeit von der Molekülmasse und des kristallinen Anteils in Frage kommen.

Die bevorzugte Dichte des erfindungsgemäß-eingesetzten PPA-haltigen Kunststoffs gemäß ISO 1183 (Methode A) in der aktuellen Fassung vom Mai 2021 liegt dabei für den vorgenannten Anwendungsbereich als Gleitlagerbauteile in Viskositätsdrehschwingungsdämpfern und/oder -tilgern zwischen 1,10 und 1,20 g/cm³, besonders bevorzugt bei 1,13 +/- (0,15) g/cm³.

Die Fertigung der Gleitlagerbauteile kann vorteilhaft durch Spritzguss erfolgen.

Das Material der Gleitlagerbauteile kann faserverstärkt, insbesondere glasfaserverstärkt ausgebildet sein. Allerdings weist auch ein homogenes PPA - Material ohne Glasfasern eine hinreichend hohe Festigkeit auf.

Die Schrumpfung beträgt bei der Fertigung gegenüber dem geschmolzenen Zustand weniger als 2,5% gemäß ASTM D955 in der aktuellen Fassung vom Mai 2021. Dies ermöglicht eine sehr passgenaue Fertigung des Gleitlagerbauteils.

Die Glasübergangstemperatur kann über 150°C, betragen und liegt somit außerhalb der typischen Dauergebrauchstemperatur eines Viskositätsschwingungsdämpfers die meist zwischen 110-130°C betragen. Temperaturen von etwa 150°C können bei der Anwendung kurzzeitig auftreten, es hat sich allerdings überraschend gezeigt, dass das PPA-Material des Gleitlagerbauteils diese kurzzeitigen Temperaturspitzen ohne umfangreiche Materialveränderungen standhalten kann.

Somit hat sich das Polyphthalamid als Material von Gleitlagerbauteilen von Viskositätsschwingungsdämpfern als hervorragende Kompromisslösung für die Verbesserung der Reibeigenschaften bei gleichzeitig geringer Verschlechterung der Wechselwirkung mit Silikonöl im Vergleich zu LCP-Material und unter Berücksichtigung der Randbedingungen an mechanischer Stabilität, Erschütterung und Temperaturstabilität von Gleitlagerbauteilen für das Anwendungsgebiet der Viskositätsschwingungsdämper erwiesen.

Nachfolgend wird ein Ausführungsbeispiel der Erfindung anhand der beigefügten Zeichnungen näher erläutert. Es zeigen:
- Fig. 1: eine perspektivische Teilschnittdarstellung eines erfindungsgemäßen Viskositätsdrehschwingungsdämpfers oder Viskositätsdrehschwingungstilgers;
- Fig. 2: eine Querschnittsdarstellung des Viskositätsdrehschwingungsdämpfers oder Viskositätsdrehschwingungstilgers aus Figur 1; und
- Fig. 3: eine perspektivische Ansicht einer Ausführungsvariante einer Bundbuchse.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Viskositätsdrehschwingungsdämpfer, Bundbuchse, Schwungring und dergleichen. Diese Begriffe sind nicht einschränkend zu verstehen, das heißt, durch verschiedene Arbeitsstellungen oder die spiegelsymmetrische Auslegung oder dergleichen können sich diese Bezüge ändern.

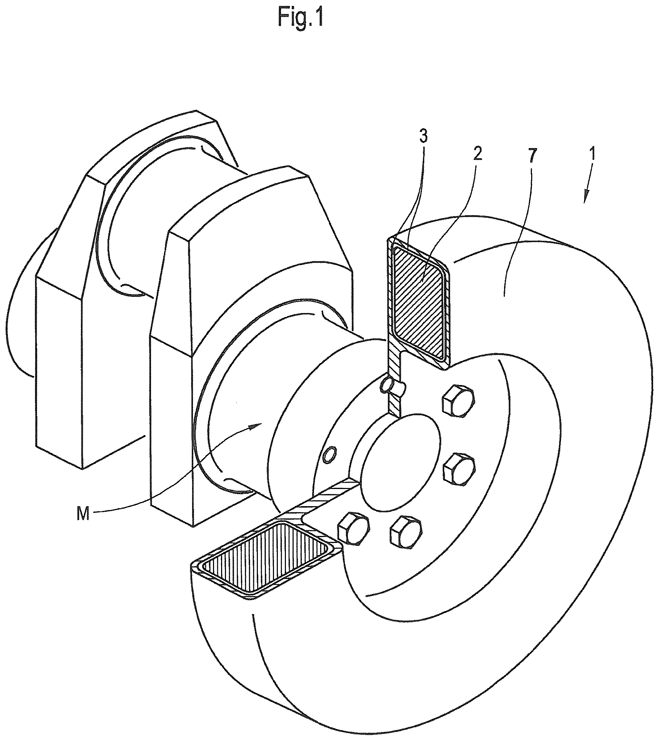

In der Fig. 1 ist mit dem Bezugszeichen 1 insgesamt eine Ausführungsvariante eines erfindungsgemäßen Viskositätsdrehschwingungsdämpfers oder Viskositätsdrehschwingungstilgers bezeichnet. Der Viskositätsdrehschwingungsdämpfer oder -tilger weist dabei im Wesentlichen ein ringförmiges Gehäuse 7 auf, welches mit der Kurbelwelle M eines Motors drehfest verbunden ist. Innerhalb des Gehäuses 7 ist ein Schwungring 2 angeschlossen, der von einer als Dämpfungsmedium dienenden Silikonöl umgeben ist, das zwischen dem Gehäuse 7 und dem Schwungring 2 einen Scherspalt 3 ausfüllt.

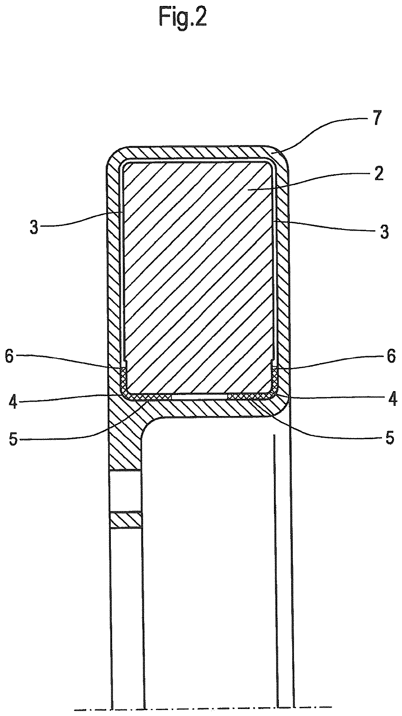

Wie in Fig. 2 gut zu erkennen ist, wird der an dem Gehäuse 7 lose gelagerte Schwungring 2 durch Gleitlagerbauteile 4 in Form von Bundbuchsen mit bevorzugtem L-förmigen Querschnitt, mit der in der Schwungring radial und axial in dem Gehäuse geführt ist. Die Gleitlagerbauteile 4 liegen dabei in einem Scherspalt 3 zwischen dem Schwungring 2 und dem Gehäuse 7, wobei der Scherspalt 3 mit Silikonöl befüllt ist.

Um eine Beschädigung, insbesondere Herabsetzung der Viskosität, des Silikonöls durch Wechselwirkungen mit dem Material, aus dem die Bundbuchsen hergestellt sind, möglichst zu vermeiden, sind die Bundbuchsen aus einem Polypthalamid gefertigt. Mit solchen PPA-gefertigten Bundbuchsen 4 ist eine Reduzierung der Viskositätsabnahme des Silikonöls im Vergleich zu PA66-Bundbuchsen erkennbar, was eine deutliche Verlängerung der Lebensdauer bewirkt.

Der Einsatz solcher aus Polypthalamid-hergestellten Bundbuchsen ermöglicht die Einsparung von Materialien, wie beispielsweise Lüfterscheiben, welche bei herkömmlichen Viskositätsdrehschwingungsdämpfern oder -tilgern eine Kühlung des im Betrieb sich aufheizenden Silikonöls herbeiführen, um die Schädigung des Silikonöls mit den im Stand der Technik aus bisher verwendeten Polyamid-Verbindungen hergestellten Bundbuchsen möglichst gering zu halten.

Zugleich wird durch die gegenüber Flüssigkristallpolymeren verbesserten Reibeigenschaften des verwendeten Materials eine Verlängerung der Haltbarkeit des Gleitlagerbauteils und des Gleitlagers insgesamt erreicht.

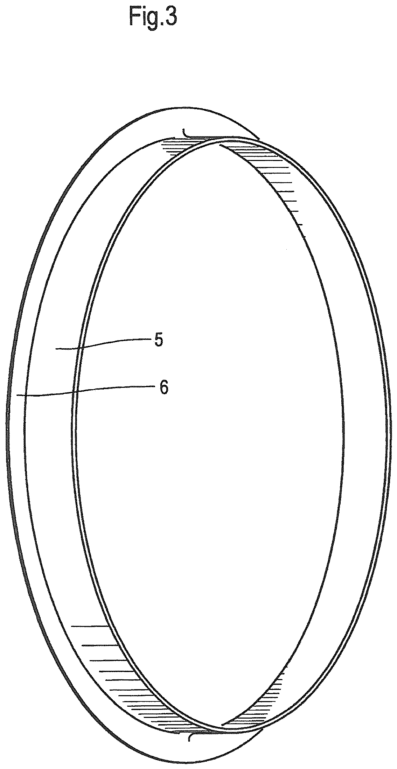

Der Begriff eines Gleitlagerbauteils 4 im Rahmen der vorliegenden Erfindung ist nicht auf eine Bundbuchse aus der Fig. 1 -3 beschränkt. Es kann auch einer oder mehrere Axiallagerringe zur Gleitlagerung des Schwungrings oder einer oder mehrere Gleitlagerstopfen zur Gleitlagerung des Schwungrings unter den Begriff verstanden werden. Dem Fachmann sind derartige alternativen Lagerelemente aus dem Bereich der Viskositätsdrehschwingungsdämpfer bekannt.

Das Gleitlagerbauteil kann auch als Verbundbauteil gefertigt sein und lediglich ein Segment, z.B. in der Ausgestaltung eines Axiallagerrings einen Gleitlagerring aus Polyphthalamid und einem Stützring aus Metall aufweisen.

Dabei ist das Gleitlagerbauteil einstückig und insbesondere beschichtungsfrei ausgebildet ist, so dass das Gleitlagerbauteil zumindest bereichsweise in Kontakt mit dem Silikonöl steht.

Das oder die Gleitlagerbauteile sind vorteilhaft besonders dünn ausgebildet. So können Sie in einem Scherspalt mit einer Spaltbreite von weniger als 0.5 mm angeordnet sein. Zugleich weisen Sie durch die Materialwahl von PPA eine hohe mechanische Festigkeit auf.

Konkret können das oder die Gleitlagerbauteile einen L-förmigen Querschnitt aufweisen, wie auch aus Fig. 2 erkennbar ist. Dadurch ist eine Lagerung des Schwungrings 2 von zwei Seiten - radial und axial möglich. Diese doppelte mechanische Reibbelastung kann das Gleitlagerbauteil aus PPA allerdings problemlos und über einen langen Betriebszeitraum aushalten.

Das PPA kann auch olefinmodifiziert, insbesondere Polyethylen bzw. PEmodifiziert sein, beispielsweise zu 10-20 Gew.%. Auch Additive zu weniger als 7% können im Kunststoff enthalten sein. Der eigentliche Kunststoff des Gleitlagerbauteils kann somit reines PPA oder ein Blend und/oder Copolymer aus PPA und PE, allerdings ist der überwiegende Anteil, also mehr als 50 Gew.%, stets ein PPA. Daher ist im Kontext der vorliegenden Erfindung ein Gleitlagerbauteil aus PPA, als Gleitlagerbauteil mit einem Kunststoff der überwiegend aus PPA gebildet ist, zu verstehen.

### Bezugszeichenliste

- 1: Viskositätsdrehschwingungsdämpfer oder Viskositätsdrehschwingungstilger
- 2: Schwungring
- 3: Scherspalt
- 4: Bundbuchse
- 7: Gehäuse

- M: Kurbelwelle

## Patentansprüche

1. Viskositätsdrehschwingungsdämpfer oder -tilger (1), aufweisend ein an einer Kurbelwelle (M) eines Motors, insbesondere eines Verbrennungsmotors, befestigbares Nabenteil und einen relativ zum Nabenteil verdrehbar gelagerten Schwungring (2), wobei zwischen dem Nabenteil und dem Schwungring (2) ein mit einem Silikonöl gefüllter Scherspalt (3) ausgebildet ist, in welchem eines oder mehrere Gleitlagerbauteile (4) zur gleitgeführten Lagerung des Schwungringes (2) angeordnet sind, **dadurch gekennzeichnet, dass** das oder die Gleitlagerbauteile (4) zumindest bereichsweise aus einem polyphthalamidhaltigen Kunststoff, mit einem Anteil von mehr als 50 Gew.% PPA, gebildet sind.

2. Viskositätsdrehschwingungsdämpfer oder -tilger (1) nach Anspruch 1, **dadurch gekennzeichnet, dass** das oder die Gleitlagerbauteile (4) als Bundbuchsen, Axiallagerring und/oder Gleitlagerstopfen ausgebildet sind.

3. Viskositätsdrehschwingungsdämpfer oder -tilger (1) nach einem der vorhergehenden Ansprüche, **dadurch gekennzeichnet, dass** das Gleitlagerbauteil (4) als ein spritzgegossener Formkörper ausgebildet ist.

4. Viskositätsdrehschwingungsdämpfer oder -tilger (1) nach Anspruch 1 oder 2, **dadurch gekennzeichnet, dass** das Material des Gleitlagerrings (4) aus Polyphthalamid eine Dichte zwischen 1,10 und 1,20 g/cm³, besonders bevorzugt bei 1,13 +/- (0,15) g/cm³, aufweist.

5. Viskositätsdrehschwingungsdämpfer oder -tilger (1) nach einem der vorhergehenden Ansprüche, **dadurch gekennzeichnet, dass** das Gleitlagerbauteil (4) einstückig und insbesondere beschichtungsfrei ausgebildet ist, so dass das Gleitlagerbauteil (4) zumindest bereichsweise in Kontakt mit dem Silikonöl steht.

6. Viskositätsdrehschwingungsdämpfer oder -tilger (1) nach einem der vorhergehenden Ansprüche, **dadurch gekennzeichnet, dass** Gleitlagerbauteil (4) faserverstärkt, insbesondere glasfaserverstärkt ausgebildet ist.

7. Viskositätsdrehschwingungsdämpfer oder -tilger (1) nach einem der vorhergehenden Ansprüche, **dadurch gekennzeichnet, dass** das Gleitlagerbauteil (4) aus einem homogenen, insbesondere faserfreien Polyphthalamid-Material, besteht.

8. Viskositätsdrehschwingungsdämpfer oder -tilger (1) nach einem der vorhergehenden Ansprüche, **dadurch gekennzeichnet, dass** das Material des Gleitlagerbauteils (4) eine Schrumpfung gegenüber einem geschmolzenen Zustand von weniger als 2,5% aufweist.

9. Viskositätsdrehschwingungsdämpfer oder -tilger (1) nach einem der vorhergehenden Ansprüche, **dadurch gekennzeichnet, dass** das oder die Gleitlagerbauteile (4) in dem Scherspalt (3) mit einer Spaltbreite von weniger als 0.5 mm angeordnet ist oder sind.

10. Viskositätsdrehschwingungsdämpfer oder -tilger (1) nach einem der vorhergehenden Ansprüche, **dadurch gekennzeichnet, dass** das oder die Gleitlagerbauteile (4) einen L-förmigen Querschnitt aufweist oder aufweisen zur Lagerung des Schwungrings (2) von zwei Seiten.

## Claims

1. Viscous torsional vibration damper or absorber (1), having a hub part, which is fastenable to a crankshaft (M) of an engine, in particular an internal combustion engine, and a vibration damper ring (2) which is mounted rotatably relative to the hub part, wherein a shear gap (3), which is filled with a silicone oil, is formed between the hub part and the vibration damper ring (2), in which shear gap one or more plain bearing components (4) are arranged for the slidingly guided mounting of the vibration damper ring (2), **characterized in that** the one or more plain bearing components (4) are formed, at least in some regions, by a polyphthalamide-containing plastic, with a proportion of more than 50% by weight PPA.

2. Viscous torsional vibration damper or absorber (1) according to claim 1, **characterized in that** the one more plain bearing components (4) are formed as flange bushings, an axial bearing ring, and/or a plain bearing plug.

3. Viscous torsional vibration damper or absorber (1) according to any one of the preceding claims, **characterized in that** the plain bearing component (4) is formed as an injection-molded body.

4. Viscous torsional vibration damper or absorber (1) according to claim 1 or 2, **characterized in that** the material of the plain bearing ring (4) made from polyphthalamide has a density of between 1.10 and 1.20 g/cm³, most preferably 1.13±(0.15) g/cm³.

5. Viscous torsional vibration damper or absorber (1) according to any one of the preceding claims, **characterized in that** the plain bearing component (4) is formed as a single-piece and in particular to be coating-free, so that the plain bearing component (4) is in contact, in at least some regions, with the silicone oil.

6. Viscous torsional vibration damper or absorber (1) according to any one of the preceding claims, **characterized in that** the plain bearing component (4) is fiber reinforced, in particular glass-fiber reinforced.

7. Viscous torsional vibration damper or absorber (1) according to any one of the preceding claims, **characterized in that** the plain bearing component (4) consists of a homogeneous, in particular fiber-free, polyphthalamide material.

8. Viscous torsional vibration damper or absorber (1) according to any one of the preceding claims, **characterized in that** the material of the plain bearing component (4) has a shrinkage in comparison with a molten state of less than 2.5%.

9. Viscous torsional vibration damper or absorber (1) according to any one of the preceding claims, **characterized in that** the one or more plain bearing components (4) are arranged in the shear gap (3) with a gap width of less than 0.5 mm.

10. Viscous torsional vibration damper or absorber (1) according to any one of the preceding claims, **characterized in that** the one or more plain bearing components (4) have an L-shaped cross-section in order to mount the vibration damper ring (2) from two sides.

## Revendications

1. Amortisseur ou absorbeur de vibrations torsionnelles de viscosité (1) présentant une partie de moyeu pouvant être fixée sur un vilebrequin (M) d'un moteur, en particulier d'un moteur à combustion, et une bague d'inertie (2) montée de manière à pouvoir tourner par rapport à la partie de moyeu, dans lequel une fente de cisaillement (3) remplie d'une huile de silicone est conçue entre la partie de moyeu et la bague d'inertie (2), fente dans laquelle un ou plusieurs composants de palier lisse (4) sont disposés pour le montage guidé par glissement de la bague d'inertie (2), **caractérisé en ce que** le ou les composants de palier lisse (4) sont formés au moins par zones d'une matière plastique contenant du polyphtalamide, avec une proportion de plus de 50 % en poids de PPA.

2. Amortisseur ou absorbeur de vibrations torsionnelles de viscosité (1) selon la revendication 1, **caractérisé en ce que** le ou les composants de palier lisse (4) sont conçus en tant que douilles à collet, bague de palier axial et/ou bouchons de palier lisse.

3. Amortisseur ou absorbeur de vibrations torsionnelles de viscosité (1) selon l'une quelconque des revendications précédentes, **caractérisé en ce que** le composant de palier lisse (4) est conçu en tant que corps moulé par injection.

4. Amortisseur ou absorbeur de vibrations torsionnelles de viscosité (1) selon la revendication 1 ou 2, **caractérisé en ce que** le matériau de la bague de palier lisse (4) en polyphtalamide présente une densité entre 1,10 et 1,20 g/cm³, le plus préférentiellement de 1,13 +/- (0,15) g/cm³.

5. Amortisseur ou absorbeur de vibrations torsionnelles de viscosité (1) selon l'une quelconque des revendications précédentes, **caractérisé en ce que** le composant de palier lisse (4) est conçu d'un seul tenant et en particulier sans revêtement, de sorte que le composant de palier lisse (4) est en contact au moins par zones avec l'huile de silicone.

6. Amortisseur ou absorbeur de vibrations torsionnelles de viscosité (1) selon l'une quelconque des revendications précédentes, **caractérisé en ce que** le composant de palier lisse (4) est renforcé de fibres, en particulier renforcé de fibres de verre.

7. Amortisseur ou absorbeur de vibrations torsionnelles de viscosité (1) selon l'une quelconque des revendications précédentes, **caractérisé en ce que** le composant de palier lisse (4) est constitué d'un matériau homogène, en particulier d'un matériau polyphtalamide sans fibres.

8. Amortisseur ou absorbeur de vibrations torsionnelles de viscosité (1) selon l'une quelconque des revendications précédentes, **caractérisé en ce que** le matériau du composant de palier lisse (4) présente un retrait par rapport à un état fondu inférieur à 2,5 %.

9. Amortisseur ou absorbeur de vibrations torsionnelles de viscosité (1) selon l'une quelconque des revendications précédentes, **caractérisé en ce que** le ou les composants de palier lisse (4) est ou sont disposés dans la fente de cisaillement (3) avec une largeur de fente inférieure à 0,5 mm.

10. Amortisseur ou absorbeur de vibrations torsionnelles de viscosité (1) selon l'une quelconque des revendications précédentes, **caractérisé en ce que** le ou les composants de palier lisse (4) présente(nt) une section transversale en forme de L pour monter la bague d'inertie (2) de deux côtés.
